# DEMANDE DE BREVET EUROPEEN

(11) **EP 1 662 436 A1**
(43) Date de publication de la demande: **31.05.2006**
(21) Numéro de dépôt: 05292443.8
(22) Date de dépôt: 18.11.2005
(51) Int. Cl.: G06Q 30/00, G06Q 20/00

(54) **Procédé de sécurisation de titres de valeur**

(30) Priorité: 26.11.2004 FR 0412580
(71) Demandeur: FCO CHEQUES & SECURITE, 75017 Paris (FR)
(72) Inventeur: Guilbault, Stéphane, 75008 Paris (FR); Lixon, Bernard, 78790 Rosay (FR)
(74) Mandataire: Honoré, Anne-Claire

(57) **Abrégé**

L'invention concerne un procédé de traitement sécurisé de titres de valeur (10), comportant les étapes de génération et d'impression d'au moins un code d'identification sur un titre de valeur (10), de génération d'au moins un fichier de données associé à ce titre de valeur (10), d'enregistrement dudit fichier de données dans une base de données centralisée, de consultation dudit fichier de données au cours du traitement dudit titre de valeur (10), de modification dudit fichier de données en fonction d'événements ou de transactions affectant ledit titre de valeur (10), ledit procédé étant remarquable en ce que la consultation et la modification dudit fichier de données s'opèrent par l'intermédiaire de moyens de communication connectés par une liaison sécurisée à un serveur central dans lequel est enregistrée ladite base de données centralisée, l'accès audit fichier de données étant subordonnée à la transmission préalable audit serveur central, soit lors de la première consultation, soit systématiquement lors de chaque consultation, d'une clef d'ouverture non inscrite sur ledit titre de valeur et, lors de chaque consultation, du code d'identification.

## Description

La présente invention concerne un procédé permettant de sécuriser le traitement de titres de valeur, notamment de chèque-vacances ou de chèques-restaurant, de manière à éviter une utilisation, éventuellement frauduleuse, de titres non valides ou non authentiques.

Le paiement par chèques est devenu un mode de paiement relativement courant dans la plupart des commerces de détail, des restaurants ou même des agences de voyage.

Il évite au client d'avoir à transporter en espèces des sommes d'argent trop importantes avec tous les risques de perte ou de vol que cela suppose. En outre, comparativement au système de la carte de crédit, il ne nécessite aucune saisie d'un code secret de la part du client lors d'une transaction commerciale, ce qui simplifie son utilisation.

Le système des titres à valeur fixe, de type chèques-voyage, chèques-restaurant ou chèques-cadeaux, est de plus en plus utilisé par les comités d'entreprise ou les entreprises commerciales, notamment dans le domaine de la vente de disques ou de livres ou d'organisation de voyage, lesquels distribuent ensuite lesdits titres de valeur à leurs clients respectifs, que ce soient les employés de ladite entreprise dans le cas d'un comité d'entreprise ou d'acheteurs potentiels dans le cas des entreprises commerciales. Ce système repose sur le principe de l'impression préalable d'une valeur monétaire sur lesdits titres de valeur, lesdits titres étant ensuite donnés par le titulaire desdits titres à un prestataire en échange d'un service ou d'un produit. Lesdits titres étant en général non nominatifs, le prestataire du service ou du produit ne fait alors que vérifier que la valeur monétaire totale représentée par l'ensemble des titres de valeur, éventuellement complétée par une valeur monétaire en espèces donnée en complément par le client, est suffisante pour payer le prix du service ou du produit fourni.

Ce système présente toutefois quelques inconvénients.

En premier lieu, il n'existe pas encore à l'heure actuelle de dispositions fiables et sérieuses permettant au client ou au prestataire de vérifier l'authenticité desdits titres à valeur fixe. En effet, avec les techniques d'impression ou de photocopie actuelles, il est en effet facile, même pour une personne inexpérimentée, de reproduire fidèlement un titre de valeur authentique et ainsi bénéficier de manière frauduleuse et gratuite d'un service ou d'un produit aux dépens du prestataire en particulier.

En outre, ce système ne permet pas non plus d'éviter une utilisation frauduleuse de titres de valeur authentiques par des personnes non titulaires ou non propriétaires, suite à un vol ou à une perte desdits titres par leur véritable titulaire ou propriétaire. En effet, lesdits titres étant en général non nominatifs, il n'est pas prévu, à l'heure actuelle, de contrôler l'identité des personnes utilisant de tels titres de valeur lors du paiement d'une transaction commerciale par exemple.

Finalement, ce système s'avère également inadapté pour empêcher, ou tout au moins détecter, d'éventuelles utilisations de titres de valeur non valides, notamment du fait que les titres de valeur sont en cours de création, périmés ou déjà utilisés.

On connaît également des documents US 6.193.155, CA 2.311.190 et EP 0.354.260 des systèmes et procédés de traitement de titres de valeur, prévoyant uniquement l'émission et la validation desdits titres, en liaison avec un compte bancaire, notamment par internet ou téléphone ou en mettant en oeuvre uniquement un code d'identification unique inscrit sur lesdits titres.

De tels systèmes ne permettent pas d'avoir un niveau de sécurisation suffisamment élevé.

Un des buts de l'invention est donc de remédier aux inconvénients de cet art antérieur, et, notamment, de proposer un procédé de traitement de titres de valeur permettant d'éviter l'utilisation, éventuellement frauduleuse, de titres de valeur non authentiques ou non valides.

A cet effet, et conformément à l'invention, il est proposé un procédé de traitement sécurisé de titres de valeur, comportant les étapes de génération et d'impression d'au moins un code d'identification sur un titre de valeur, de génération d'au moins un fichier de données associé à ce titre de valeur, d'enregistrement dudit fichier de données dans une base de données centralisée, de consultation dudit fichier de données au cours du traitement dudit titre de valeur, de modification dudit fichier de données en fonction d'événements ou de transactions affectant ledit titre de valeur ; ledit procédé est remarquable en ce que la consultation et la modification dudit fichier de données s'opèrent par l'intermédiaire de moyens de communication connectés par une liaison sécurisée à un serveur central dans lequel est enregistrée ladite base de données centralisée, l'accès audit fichier de données étant subordonnée à la transmission préalable audit serveur central, soit lors de la première consultation, soit systématiquement lors de chaque consultation, d'une clef d'ouverture non inscrite sur ledit titre de valeur et, lors de chaque consultation, du code d'identification.

En utilisant le procédé tel que défini ci-dessus, il sera ainsi possible d'assurer un suivi des titres de valeur durant tout leur cycle de traitement, depuis leur création jusqu'à leur utilisation, en interrogeant ou en modifiant les données qui leur sont affectées dans une base de données centralisées, l'absence de données ou la présence de données particulières dans ladite base de données pouvant notamment révéler la non-authenticité ou la non-validité d'un titre de valeur donné.

D'autres avantages et caractéristiques ressortiront mieux de la description qui va suivre du procédé de traitement sécurisé de titres de valeur suivant l'invention en référence aux dessins sur lesquels :
- la figure 1 représente le recto d'un titre de valeur à valeur fixe, du type chèque-restaurant, possédant un code d'identification tel que prévu dans la présente invention,
- la figure 2 représente une configuration possible d'un système de traitement de titres de valeur mettant en oeuvre un procédé de traitement conforme à la présente invention,
- la figure 3 est un organigramme représentant les étapes initiales d'un processus de traitement de titres de valeur conforme à l'invention,
- la figure 4 est un organigramme représentant les étapes ultérieures dudit processus de traitement.

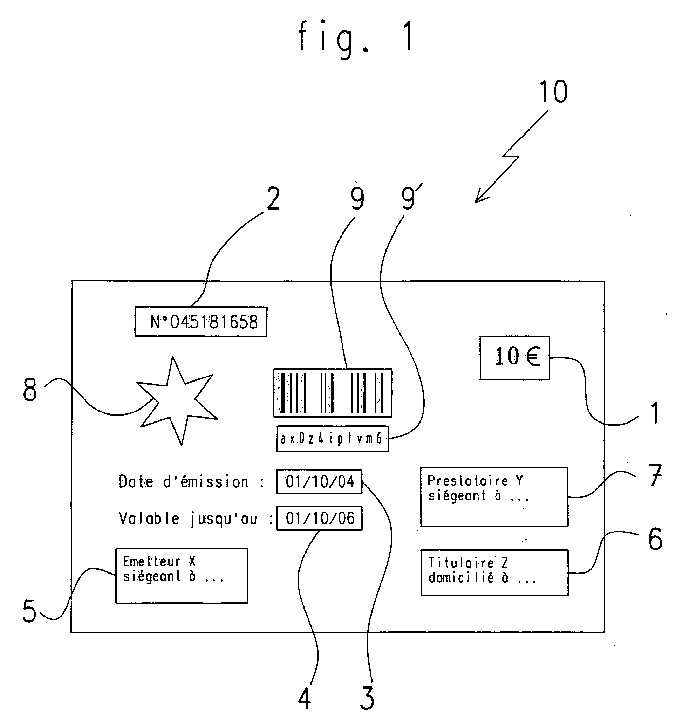

En référence à la figure 1, il est représenté un titre de valeur à valeur fixe 10, tel qu'un chèque-restaurant par exemple. Ce titre de valeur 10 comporte une série de zones réservées pour l'impression de données variables, spécifiques audit titre de valeur 10, et personnalisées, notamment, en fonction de l'émetteur du titre 10 ou du titulaire du titre 10. En particulier, une zone 1 contiendra l'impression de la valeur monétaire du titre 10. Il comportera également une zone 2 correspondant au numéro de série dudit titre 10, une zone 3 correspondant à la date d'émission du titre 10, une zone 4 correspondant à la date limite de validité du titre 10, une zone 5 correspondant au nom et à l'adresse de l'émetteur du titre 10, une zone 6 correspondant au nom et à l'adresse du titulaire du titre 10, une zone 7 correspondant au nom et à l'adresse du prestataire recevant au final ledit titre 10. Les données correspondantes pourront être imprimées soit directement sur le titre de valeur 10, soit préalablement sur une étiquette adhésive destinée à être apposée sur le titre de valeur 10 dans la zone correspondante. Lesdites données pourront se présenter soit sous la forme d'une suite de caractères alphanumériques, soit sous la forme d'un code à barre lisible par un lecteur adéquat et transposable ensuite, au moyen notamment d'un ordinateur, en une suite de caractères alphanumériques.

Par ailleurs, en vue de renforcer la protection du titre 10 aux tentatives de reproduction ou de copie frauduleuse, il sera également avantageux de prévoir l'apposition sur le titre de valeur 10 d'un élément de sécurisation 8. Cet élément de sécurisation 8 pourra notamment consister en un motif imprimé à l'aide d'une encre fluorescente visible uniquement dans les ultraviolets, ou à l'aide d'une encre iridescente changeant de contraste selon l'angle d'observation. Ces éléments de sécurisation 8 possédant des effets non reproductibles par photocopie seront particulièrement efficaces pour lutter contre la contrefaçon de titres authentiques. A cet égard, tout produit ou élément possédant un effet optique variable selon les conditions d'observations sera susceptible de constituer un élément de sécurisation 8 pour le titre de valeur 10. De ce fait, on pourra également utiliser un motif holographique, un motif imprimé à l'aide d'une encre thermochrome, ou encore un motif visible uniquement à l'aide d'un rayonnement électromagnétique spécifique, non compris dans le domaine du visible. Il est également envisageable d'inclure ledit élément de sécurisation 8 à l'intérieur même du support du titre de valeur 10. A ce titre, un filigrane et/ou une bande réfléchissante pourront avantageusement être inclus dans la masse fibreuse d'un titre de valeur 10 constitué de papier.

Pour renforcer encore la sécurisation du titre de valeur 10, il sera également possible de prévoir un ou plusieurs éléments de sécurisation 8 sous la forme de motifs de micro-lettres ou de micro-lignes et/ou de motifs guillochés, du type FCO® LABYRINTH, lesquels sont difficilement reproductibles par photocopie étant donné le pouvoir de résolution relativement faible des appareils de reproduction ou des imprimantes actuellement sur le marché.

Conformément au procédé de traitement de l'invention, le titre de valeur 10 comportera également une zone 9 et/ou une zone 9', dans laquelle sera imprimé ou apposé le code d'identification unique utilisé par la suite pour consulter ou modifier le fichier de données affecté spécifiquement audit titre de valeur 10 dans la base de données centralisées. Ce code d'identification pourra se présenter sous la forme d'un code à barre dans la zone 9 et/ou sous la forme d'une suite de caractères alphanumériques dans la zone 9'. Ce code d'identification résultera en particulier d'un algorithme de cryptage complexe mis en oeuvre au niveau du serveur central, en utilisant notamment une ou plusieurs données personnalisées dudit titre de valeur 10. Lors de chaque consultation de la base de données centralisée, le serveur central effectuera donc un décryptage de ce code d'identification de manière à retrouver lesdites données personnalisées et ainsi accéder au fichier de données affecté spécifiquement au titre de valeur 10 dans la base de données centralisée.

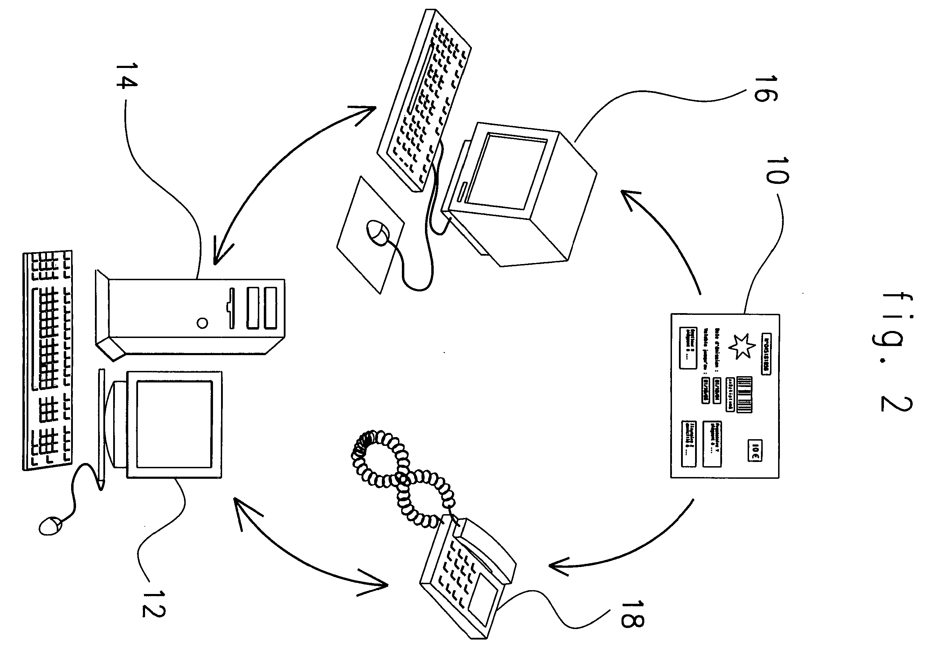

En référence à la figure 2, il est représenté une configuration possible d'un système de traitement sécurisé mettant en oeuvre un procédé de traitement sécurisé conforme à l'invention.

Ce système de traitement comporte notamment un serveur central 12 comprenant ou connecté à une base de données centralisée 14, dans laquelle est enregistré l'ensemble des fichiers de données spécifiques aux titres de valeur authentiques 10 en circulation ou en cours de création durant une période de temps donnée. Cette période de temps pourra varier selon la fréquence des modifications opérées au niveau de la base de données centralisée 14 en fonction des événements ou des transactions affectant un ou plusieurs titres de valeur 10. En principe, au moins une mise à jour de la base de données centralisée 14 sera effectuée quotidiennement. Toutefois, de façon à garantir un niveau de sécurisation maximum lors du traitement des titres de valeur 10, il sera souhaitable d'entreprendre cette mise à jour lors de chaque transaction ou événement affectant un titre de valeur 10. De ce fait, il sera avantageux de disposer des postes de consultations de la base de données centralisée 14 le plus proche possible des lieux de circulation des titres de valeur 10 de manière à permettre une lecture, et éventuellement une modification, des données des fichiers affectés aux titres de valeur 10 simultanément à une transaction ou à un événement affectant lesdits titres 10.

La solution proposée à ce niveau consiste à connecter les postes de consultation au serveur central 12 par l'intermédiaire d'une liaison à distance, de préférence sécurisée par chiffrement ou signature. Cette liaison pourra consister notamment en une liaison téléphonique traditionnelle, une liaison par câble ou encore une liaison par satellite. Dans la configuration représentée, chaque poste de consultation consistera en un moyen de communication du type ordinateur 16 équipé d'un modem, ou du type téléphone 18, fixe ou portable.

Dans le cas d'une consultation à l'aide d'un ordinateur 16, l'accès au serveur central 12 se fera alors préférentiellement par l'intermédiaire d'un réseau de type Internet ou Intranet. A cet égard, l'ordinateur 16 sera équipé d'un ou plusieurs moyens de saisie du code d'identification, soit du type lecteur de code-barre, tels qu'un stylo-lecteur par exemple, de manière à lire les codes d'identification se présentant sous la forme de codes à barre, soit du type clavier de manière à saisir les codes d'identification se présentant sous la forme d'une suite de caractères alphanumériques.

Dans le cas d'une consultation à l'aide d'un téléphone 18, le serveur central 12 fonctionnera à la manière d'un serveur vocal. La saisie du code d'identification de type alphanumérique s'opèrera donc soit en utilisant le clavier du téléphone 18, soit en lisant le code à haute voix, si le serveur vocal 12 est équipé d'un dispositif de reconnaissance vocale.

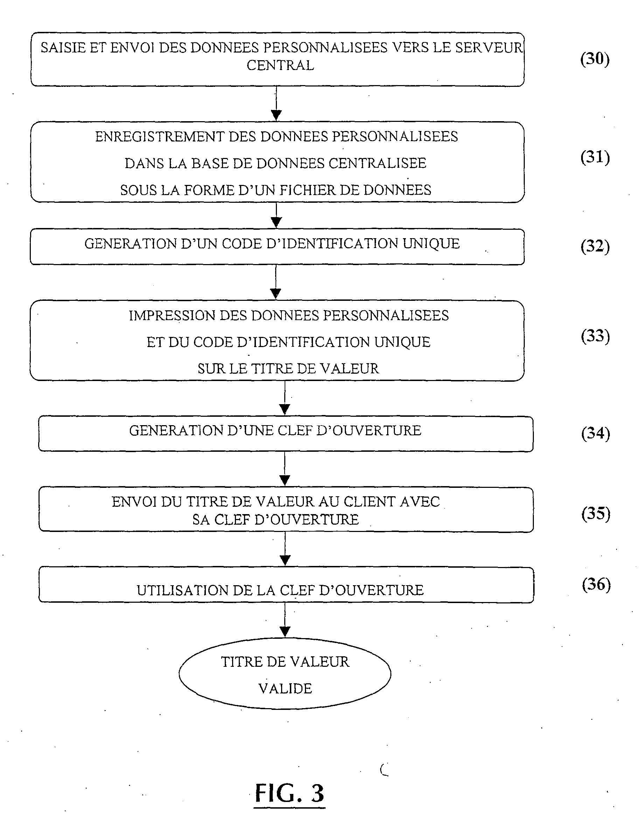

La figure 3 représente un organigramme des opérations successives aboutissant à la création d'un titre de valeur authentique valide.

Comme l'illustre la figure 3, les données personnalisées spécifiques du titre de valeur à créer sont, dans une première étape 30, saisies, à l'aide d'un clavier d'un ordinateur 16, et envoyées vers le serveur central 12 de manière à être enregistrées, dans une seconde étape 31, sous forme d'un fichier de données dans la base de données centralisée 14. Ces données seront en principe non modifiables par la suite, au cours des étapes de traitement ultérieures du titre de valeur 10. A ce titre, le fichier de données pourra comporter au moins une des données personnalisées suivantes : le nom du titulaire, le code du titulaire, le nom de l'organisme émetteur, le code de l'organisme émetteur, la valeur du titre, la date ou l'année d'émission du titre, la date limite de validité du titre et le numéro de série du titre. Il sera également affecté une donnée d'état correspondant à l'état de validité du titre 10, celle-ci variant en fonction des événements ou des transactions affectant le titre 10. A ce stade du traitement, la donnée d'état affectée définira le titre 10 comme en cours de création. Cette donnée d'état sera également enregistrée dans le fichier de données préalablement créé pour le titre de valeur.

Dans une troisième étape 32, le serveur central 12 va générer le code d'identification unique, et éventuellement certaines autres données personnalisées non saisies, en utilisant certaines des données personnalisées préalablement saisies et, dans le cas du code d'identification unique, en appliquant un algorithme complexe de cryptage. Ce cryptage permettra de garantir à ce code d'identification unique une confidentialité suffisante vis-à-vis d'un éventuel déchiffrement. Certaines des données générées à ce niveau et/ou le code d'identification unique pourront ensuite être enregistrés dans le fichier de données affecté spécifiquement au titre 10.

Dans une étape ultérieure 33, il est effectué ensuite une impression ou une apposition de l'ensemble ou d'une partie des données personnalisées sur le titre de valeur, ainsi que l'impression ou l'apposition du code d'identification unique sous forme d'un code à barre et/ou sous forme d'une suite de caractères alphanumériques.

Afin de renforcer encore le niveau de sécurisation du processus global de traitement des titres de valeur, il est prévu une série d'étapes additionnelles consistant à verrouiller l'accès en consultation ou en modification du fichier de données jusqu'à la transmission d'une clef d'ouverture au serveur central. Cette clef d'ouverture pourra consister notamment en la combinaison d'un identifiant, de type login, et d'un mot de passe correspondant, ou en un simple code numérique ou alphanumérique et sera générée par le serveur central 12 au cours d'une étape additionnelle 34. Cette clef d'ouverture pourra être demandée soit uniquement lors de la première consultation du fichier de données, soit systématiquement lors de chaque consultation ou modification dudit fichier.

Lors de l'étape ultérieure 35, l'organisme chargé de la gestion des titres de valeur envoie donc le titre de valeur 10 créé à l'émetteur correspondant, cet émetteur étant, dans le cas particulier des chèques-restaurant, le comité d'entreprise, et fournit dans la lettre d'accompagnement la clef d'ouverture permettant à l'émetteur d'ouvrir le compte attaché au titre 10 dans la base de données centralisée, toute consultation antérieure du fichier de données affecté au titre 10 étant jusqu'alors impossible.

L'étape finale 36 de création du titre de valeur 10 et de son compte attaché consistera donc pour l'émetteur du titre 10 à transmettre la clef d'ouverture au serveur central 12 en utilisant l'un des moyens de communication 16 ou 18 précédemment cités. Outre les conséquences mentionnées auparavant, cette opération modifiera les données d'état du titre 10 correspondant, le titre 10 étant alors considéré dans la base de données centralisée 14 comme étant valide.

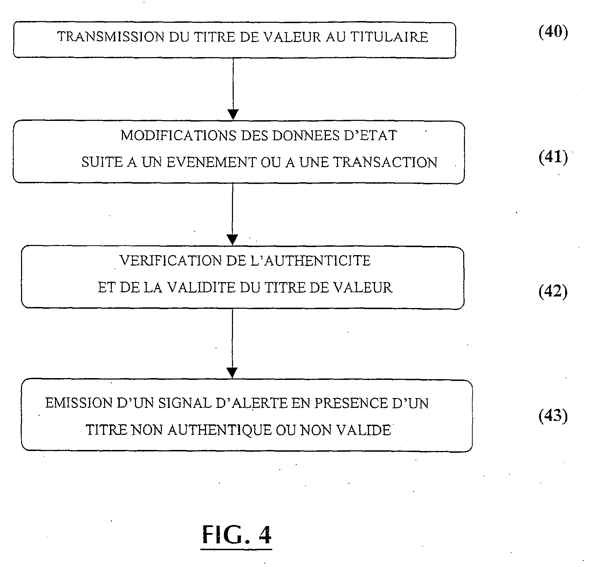

La figure 4 représente un organigramme des opérations ultérieures de traitement succédant à la création du titre 10 et pouvant modifier l'état de validité du titre 10.

Dans une première étape de traitement ultérieure 40, l'émetteur du titre 10 transmet au titulaire correspondant le titre de valeur valide 10 en imprimant éventuellement son nom sur ledit titre 10 dans la zone 6 correspondante et en enregistrant les données correspondantes dans le fichier de données stocké dans la base de données centralisée 14. Le titulaire est alors en droit d'utiliser ledit titre de valeur 10 pour opérer une transaction commerciale auprès d'un prestataire donné.

Dans une étape 41 suivante, concomitante, voire même postérieure, le titre de valeur 10 pourra alors être soumis à un certain nombre d'événements ou de transactions, lesquels aboutiront à une modification de ses données d'état. Ses modifications pourront être générées soit de manière automatique par le serveur central 12 étant donné leur caractère prévisible, soit suite à un événement ou une transaction particulière pour lequel le titulaire, ou tout au moins le propriétaire du moment, a agi auprès de l'organisme chargé de la gestion des titres, ou par l'intermédiaire du serveur central 12, de manière à modifier lesdites données d'état.

En particulier, le titre de valeur 10 possédant généralement une validité limitée dans le temps, le serveur central 12 affectera automatiquement à la fin de la période de validité du titre 12 une donnée d'état exprimant sa non-validité, tel que « titre périmé ».

En cas de vol ou de perte de son titre 12, le titulaire pourra également décider de faire opposition à une utilisation éventuelle de son titre 10 par une personne étrangère. En agissant auprès de l'organisme chargé de la gestion des titres, ou, selon le cas, directement dans la base de données centralisée 14 par l'intermédiaire du serveur central 12, il sera ainsi capable d'indiquer l'invalidité du titre 10, en affectant une donnée d'état du type « titre volé », « titre perdu » ou « titre en opposition ».

Par ailleurs, suite à une transaction commerciale dans laquelle un titre de valeur valide 10 est échangé entre un titulaire et un prestataire, le prestataire, ou le titulaire, pourra de la même manière intervenir auprès de l'organisme chargé de la gestion des titres, ou, selon le cas, directement dans la base de données centralisée 14 par l'intermédiaire du serveur central 12 pour indiquer que le titre 10 est en cours de compensation ou a été encaissé et, de ce fait, n'est plus valide.

Finalement, lorsque l'organisme chargé de la gestion des titres reçoit de la part du prestataire le titre de valeur encaissé 10, il détruit, ou tout au moins modifie suffisamment le titre 10 de manière à le rendre inutilisable, et agit au niveau du serveur central 12 pour effacer de la base de données centralisée 14 le fichier de données correspondant.

Ainsi, lors d'une étape 42 suivante, concomitante, voire même postérieure, toute personne possédant le code d'identification unique du titre 10 et/ou la clef d'ouverture précédemment citée, pourra vérifier auprès du serveur central 12 que le titre de valeur 10 est toujours valide, c'est-à-dire que ses données d'état ne sont pas incompatibles avec l'utilisation du titre 10 pour effectuer une éventuelle transaction.

De la même manière, toute personne possédant le code d'identification unique et/ou la clef d'ouverture précédemment citée pourra consulter l'ensemble des données personnalisées enregistrées dans la base de données centralisée 14 pour le titre 10 en question et, ainsi, comparer avec les données personnalisées imprimées directement sur le titre 10 de manière à vérifier son authenticité.

Cette vérification, à la fois de l'authenticité et de la validité du titre 10, sera de préférence effectuée automatiquement par le serveur central 12, la personne se contentant de transmettre au serveur central 12 le code d'identification unique et les données personnalisées imprimées dont il a connaissance.

Il est alors envisageable de prévoir une étape ultérieure 43 au cours de laquelle le serveur central 12 transmet un signal d'alerte ou un message d'alerte par l'intermédiaire des moyens de communication 16 ou 18 lorsqu'il détecte que les données d'état et/ou personnalisées affectées à un titre de valeur 10 sont incompatibles avec une transaction future effectuée en utilisant ledit titre 10, du fait que le titre 10 n'est pas valide ou n'est pas authentique, ou qu'aucun fichier de données n'est présent dans la base de données centralisée 14 pour ledit titre de valeur 10, du fait que, notamment, le titre 10 est une copie servile frauduleuse. Dans ce cas, il pourra également interdire toute modification éventuelle du fichier de données affecté audit titre de valeur 10 dans la base de données centralisée 14 de manière à améliorer encore le niveau de sécurisation du processus de traitement des titres de valeur.

Enfin, il va de soi que le procédé de traitement sécurisé de titres de valeur présenté ci-dessous n'est nullement limitatif et toute modification dans l'ordre et le contenu des étapes pourra être envisagée sans sortir du cadre de l'invention.

## Revendications

1. Procédé de traitement sécurisé de titres de valeur (10), comportant les étapes de génération (32) et d'impression (33) d'au moins un code d'identification sur un titre de valeur (10), de génération (30, 31) d'au moins un fichier de données associé à ce titre de valeur (10), d'enregistrement (31) dudit fichier de données dans une base de données centralisée (14), de consultation (42) dudit fichier de données au cours du traitement dudit titre de valeur (10), de modification (41) dudit fichier de données en fonction d'événements ou de transactions affectant ledit titre de valeur (10), **caractérisé en ce que** la consultation (42) et la modification (41) dudit fichier de données s'opèrent par l'intermédiaire de moyens de communication (16, 18) connectés par une liaison sécurisée à un serveur central (12) dans lequel est enregistrée ladite base de données centralisée (14), l'accès audit fichier de données étant subordonnée à la transmission préalable audit serveur central (12), soit lors de la première consultation soit systématiquement lors de chaque consultation, d'une clef d'ouverture non inscrite sur ledit titre de valeur (10) et, lors de chaque consultation, du code d'identification.

2. Procédé de traitement sécurisé de titres de valeur (10) selon la revendication 1, **caractérisé en ce qu'**au moins un code d'identification se présente sous la forme d'un code à barre.

3. Procédé de traitement sécurisé de titres de valeur (10) selon la revendication 1 ou 2, **caractérisé en ce qu'**au moins un code d'identification se présente sous la forme d'une suite de caractères alphanumériques.

4. Procédé de traitement sécurisé de titres de valeur (10) selon l'une quelconque des revendications précédentes, **caractérisé en ce que** les moyens de communication (16, 18) sont connectés au serveur central (12) au moyen d'une ligne téléphonique.

5. Procédé de traitement sécurisé de titres de valeur (10) selon la revendication 4, **caractérisé en ce que** les moyens de communication (18) sont constitués d'au moins un téléphone.

6. Procédé de traitement sécurisé de titres de valeur (10) selon la revendication 4 ou 5, **caractérisé en ce que** les moyens de communication (16) sont constitués d'au moins un ordinateur équipé d'un modem.

7. Procédé de traitement sécurisé de titres de valeur (10) selon la revendication précédente, **caractérisé en ce que** l'ordinateur (16) est équipé d'un lecteur de code à barres adapté pour lire les codes d'identification se présentant sous la forme de code à barres.

8. Procédé de traitement sécurisé de titres de valeur (10) selon l'une quelconque des revendications précédentes, **caractérisé en ce que** le fichier de données comporte des données personnalisées non modifiables spécifiques au titre de valeur (10), à son titulaire ou à son organisme émetteur et des données d'état modifiables relatives à l'état de validité du titre de valeur (10).

9. Procédé de traitement sécurisé de titres de valeur (10) selon la revendication précédente, **caractérisé en ce que**, lors de chaque consultation, le serveur central (12) vérifie, ou permet de vérifier, que les données d'état affectées au titre de valeur (10) sont compatibles avec une transaction future effectuée en utilisant ledit titre de valeur (10).

10. Procédé de traitement sécurisé de titres de valeur (10) selon la revendication 8 ou 9, **caractérisé en ce que**, lors de chaque consultation, le serveur central (12) effectue, ou permet d'effectuer, une comparaison entre les données personnalisées affectées au titre de valeur (10) dans la base de données centralisée (14) et les données personnalisées imprimées directement sur ledit titre de valeur (10) de manière à vérifier son authenticité.

11. Procédé de traitement sécurisé de titres de valeur (10) selon la revendication 9 ou 10, **caractérisé en ce que**, lorsque le serveur central (12) détecte que les données d'état et/ou personnalisées affectées au titre de valeur (10) sont incompatibles avec une transaction future effectuée en utilisant ledit titre de valeur (10), il émet un signal ou un message d'alerte de manière à prévenir de cette incompatibilité.

12. Procédé de traitement sécurisé de titres de valeur (10) selon l'une quelconque des revendications 9 à 11, **caractérisé en ce que**, lorsque le serveur central (12) détecte que les données d'état et/ou personnalisées affectées au titre de valeur (10) sont incompatibles avec une transaction future effectuée en utilisant ledit titre de valeur (10), il interdit toute modification éventuelle du ou des fichiers de données affectés au titre de valeur (10).

13. Procédé de traitement sécurisé de titres de valeur (10) selon l'une quelconque des revendications 8 à 12, **caractérisé en ce que** le fichier de données comporte au moins une des données personnalisées suivantes : le nom du titulaire, le code du titulaire, le nom de l'organisme émetteur, le code de l'organisme émetteur, la valeur du titre de valeur, l'année d'émission du titre de valeur, la date limite de validité du titre de valeur, le numéro de série du titre de valeur.

14. Procédé de traitement sécurisé de titres de valeur (10) selon l'une quelconque des revendications 8 à 13, **caractérisé en ce que** le fichier de données comporte au moins une des données d'état suivantes : titre valide, titre volé, titre périmé, titre perdu, titre falsifié, titre encaissé, titre en cours de création.

15. Procédé de traitement sécurisé de titres de valeur (10) selon l'une quelconque des revendications précédentes, **caractérisé en ce que** la possibilité de consulter et de modifier un fichier de données affecté à un titre de valeur (10) est subordonnée à la transmission préalable d'une clef d'ouverture au serveur central (12).

16. Procédé de traitement sécurisé de titres de valeur (10) selon l'une quelconque des revendications précédentes, **caractérisé en ce qu'**il comporte une étape (33) d'impression ou d'apposition de données personnalisées sur le titre de valeur.

17. Procédé de traitement sécurisé de titres de valeur selon l'une quelconque des revendications précédentes, **caractérisé en ce qu'**il comporte une étape (33) d'impression ou d'apposition d'un élément de sécurisation (8) dans ou sur le titre de valeur.
